# EUROPEAN PATENT SPECIFICATION

(11) **EP 1 733 592 B1**
(45) Date of publication and mention of the grant of the patent: **25.03.2009**
(21) Application number: 05744930.8
(22) Date of filing: 08.04.2005
(51) Int. Cl.: H04Q 11/00, H04J 3/16

(54) **METHOD AND APPARATUS FOR COMMUNICATING BETWEEN A LEGACY PON NETWORK AND AN UPGRADED PON NETWORK**
VERFAHREN UND VORRICHTUNG ZUM KOMMUNIZIEREN ZWISCHEN EINEM LEGACY-PON-NETZWERK UND EINEM AUFGERÜSTETEN PON-NETZWERK
PROCEDE ET DISPOSITIF DE COMMUNICATION ENTRE UN RESEAU OPTIQUE EXISTANT ET UN RESEAU OPTIQUE AMELIORE

(30) Priority: 09.04.2004 US 561005 P
(43) Date of publication of application: 20.12.2006
(73) Proprietor: Nokia Siemens Networks GmbH & Co. KG, 81541 München (DE)
(72) Inventor: BRIDGES, Brad, Winter Park, Florida 32792 (US); WANG, Allen, Plano, Texas 35023 (US)
(86) International application number: PCT/EP2005/051565
(87) International publication number: WO 2005/099298

(56) References cited:
- WO-A-03/010904
- WO-A-20/04008318
- DE-A1- 4 406 509
- US-A1- 2003 048 801
- US-A1- 2004 136 712
- US-B1- 6 351 582
- OSSIEUR P. ET AL: 'An overview of passive optical networks' SIGNALS, CIRCUITS AND SYSTEMS, 2003. SCS 2003. INTERNATIONAL SYMPOSIUM ON JULY 10-11-2003 vol. 1, 10 July 2003, PISCATAWAY, NJ, USA, IEEE, pages 113 - 116, XP010654886

## Description

### Cross-Reference To Related Applications

The present application claims the benefit of the provisional patent application filed on April 9, 2004, and assigned application number 60/561,005.

### Field Of The Invention

The present invention relates to the field of communication systems, and more particularly to a method and apparatus for transitioning from a legacy Passive Optical Network(PON) to an upgraded PON.

### Background

WO 2004/008318 A2 relates to data transfer in an optical network communication system. The communications apparatus, including client interface units (CIUs) coupled to network service lines for sending and receiving data carried by the service lines in accordance with respective communication protocols. The ClUs include at least first and second CIUs that communicate with respective first and second channels of the data operating in accordance with different, respective first and second protocols. The apparatus includes optical interface units (OIUs), coupled to a passive optical network (PON) and modulating optical radiation responsive to the data so as to convey the data over the PON. The apparatus further includes a connectivity unit which conveys the data between the CIUs and the OIUs, while mapping the channels to the OIUs so that data from the first and second channel is carried in alternation by one of the OIUs to first and second users of the PON communicating respectively according to the first and second protocols.

The use of fiber optic cables to carry information signals continues to grow in popularity worldwide. Digital information signals modulate light traveling on the fiber optic cable between a source node and a receiving node. As is well known, fiber optic cable has a much higher information carrying capacity than copper wire, including the ubiquitous unshielded twisted copper pair commonly used for providing dial-up telephone service. As fiber continues to be deployed throughout telecommunications networks, its advantages over copper accrue to the user. Generally, fiber exhibits a higher bandwidth and lower signal losses than copper conductors. Fiber is also more reliable and has a longer useful life than copper conductors. Since fiber does not emit any electromagnetic radiation, it is a more secure transmission medium than copper.

A Passive Optical Network (PON), including for example a Broadband Passive Optical Network (BPON) or a Gigabit Passive Optical Network (GPON), provides multiple data transmission paths, each capable of delivering high-bandwidth data services to multiple subscribers. An exemplary BPON comprises 32 or 64 such data paths, each data path comprising one fiber optic cable. A GPON comprises, for example, 64 or 128 data paths. A standardized PON protocol controls and manages the transmission and reception of signals across the PON.

A network architecture reference model for the BPON is described in the International Telecommunications Union (TTU) Specification ITU-T G.983.1, entitled, *Broadband Optical Access Systems Based on Passive Optical Networks (PON),* which is incorporated herein by reference. Additional information can be found in related ITU specifications G.983.x, which are incorporated by reference. GPON reference models are described in the International Telecommunications Union Specifications ITU-T G.984.1 through 984-4, which is also incorporated by reference.

The PON Optical Distribution Network (ODN) further comprises optical splitters and combiners for directing information signals propagating between an Optical Line Terminal (OLT) and a plurality of Optical Network Units (ONUs). Various transmission speeds are consistent with the present invention, but according to current standards, the fiber optic path on a PON network operates at data rates of 155 Mbps, 622 Mbps, 1.25 Gbps, and 2.5 Gbps. Bandwidth allocated to each customer from this aggregate bandwidth can be statically or dynamically assigned to support voice, data, video, and multimedia applications.

As GPON networks gain popularity over BPON networks, there exists a need to have methods and systems for transitioning from the legacy BPON networks to GPON. One option is to replace all the BPON equipment with GPON equipment. However, replacing the equipment would be cost prohibitive and labor intensive. Another option would be maintaining the existing BPON network as well as the new GPON network. This option would have a lower equipment cost than the first option; however, maintaining both network types would be administratively difficult and increase maintenance costs.

Although the above options exist to transfer from a BPON network to a GPON network, they are cost and maintenance intensive. A need exists for improved methods and systems to facilitate migration between networks having different transmission protocols, without necessarily replacing all equipment associated with a legacy network.

### Summary of the Invention

Methods and apparatuses consistent with the present invention facilitate the transition from a legacy network to an upgraded network by providing a converter that communicates between the legacy network and the upgraded network. The converter is provisioned such that legacy devices, such as Optical Network Units (ONUs), appear as upgraded devices to the upgraded network, while the upgraded network looks like a legacy network to the legacy devices.

In one aspect of the invention a method is described for upgrading a legacy BPON network, having a legacy BPON OLT and a plurality of legacy BPON ONUs, to facilitate communication between the legacy BPON ONUs and an upgraded GPON OLT. The method includes the steps as in claim 1.

In another aspect of the invention a converter is provided for facilitating communication between a plurality of legacy BPON ONUs and a upgraded GPON OLT. The converter includes the features as in claim 5.

### Brief Description of the Drawings

The above mentioned and other concepts of the present invention will now be described with reference to the following drawings. The illustrated embodiments are intended to illustrate, but not to limit the invention. The drawings contain the following figures, in which like numbers refer to like parts throughout the description and drawings wherein:
Figure 1 illustrates a network consistent with an exemplary embodiment of the present invention.
Figure 2 illustrates an exemplary downstream provisioning perspective consistent with the present invention.
Figure 3 illustrates an exemplary upstream provisioning perspective consistent with the present invention.
Figure 4 illustrates a converter consistent with an exemplary embodiment of the present invention.
Figure 5 illustrates an exemplary downstream transmission consistent with the present invention.
Figure 6 illustrates an exemplary upstream transmission consistent with the present invention.
Figure 7 illustrates an exemplary learning phase associated with provisioning the converter of Figure 4.

### Detailed Description of Invention

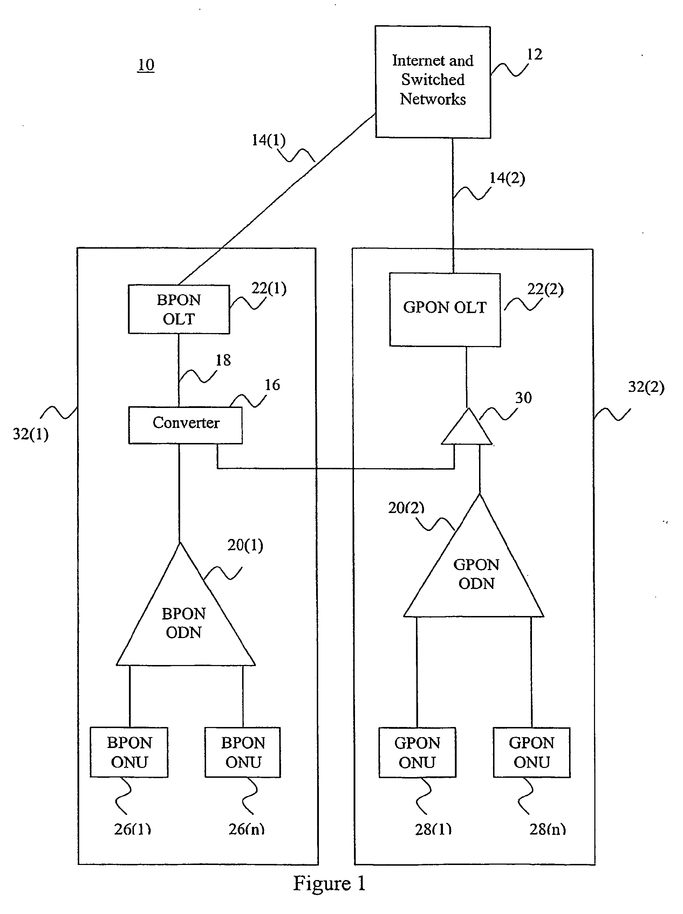

Figure 1 illustrates a network 10 consistent with one embodiment of the present invention comprising a legacy Broadband Passive Optical Network (BPON) 32(1), a Gigabit Passive Optical Network (GPON) 32(2), and an Internet and switched network 12. The network 10 may comprise, for example, a data network, a Public Switched Telephone Network (PSTN), an Integrated Services Digital Network (ISDN), a Local Area Network (LAN), a Wide Area Network (WAN), or other communication systems or combination of communication systems at one or more locations. The network 10 may comprise wireless networks, wireline networks, or a combination of wireless and wireline networks. The network 10 may support, for example, cell based protocols, such as the Asynchronous Transfer Mode (ATM) or Frame Relay protocols, and/or streams assigned to a time slot such a Time Division Multiplexing (TDM), and/or packet based protocols, such as the Transmission Control Protocol/Internet Protocol (TCP/IP) or the User Datagram Protocol (UDP). Throughout this document, "legacy" equipment and/or network refers to an installed equipment or network relating to a PON network that will be migrated to an "upgraded" equipment and/or network relating to a different PON network. Incompatibilities between the legacy and upgraded networks involve for example differences in protocols and/or bit rates. For example, BPON (also known as APON) is considered a legacy network with respect to GPON.

The BPON network 32(1) provides a communications link 14(1) between the Internet and switched networks 12 and plurality of telecommunications users or subscribers (not shown) via a BPON Optical Line Terminal (OLT) 22(1). Throughout this document, the term "communication link" refers to any suitable wireless, wireline, electrical, and/or optical based system that supports communication between network elements using ground-based and/or space-based components.

The BPON OLT 22(1) operates via an optical transceiver for broadcasting data, multimedia, and telephone signals to a plurality of BPON Optical Network Units (ONUS) 26 and for receiving data, multimedia, and telephone signals from the BPON ONUs 26. Additionally, the BPON OLT 22(1) operates as a network manager for managing the BPON ONUs 26, executing its network management functions in accordance with an Optical Network Terminal Management and Control Interface (OMCI). The BPON OLT 22(1) may be either centralized or decentralized. Throughout this document "centralized" means located at a central office (not shown), and "decentralized" means located away from the central office.

The BPON network also comprises a BPON Optical Distribution Network (ODN) 20(1) having an optical communication link to the BPON OLT 22(1). The BPON ODN 20(1) includes an optical splitter allowing multiple BPON ONUs 26 to be coupled to the BPON OLT 22(1). Throughout this document, the terms "couple" and "coupled" refer to any direct or indirect communication between two or more elements in the network 10, whether or not those elements are in physical contact with one another. For example, a typical BPON ODN 20(1) may provide 32 optical connections to the BPON ONUs 26.

The BPON ONU 26 provides a communication link between one or more subscribers or users of the network 10 and the BPON network 32(1) via a BPON ODN 20(1). Throughout this document, the term "ONU" refers to any device such as an ONU or ONT that provides a communication link from a customer premises terminal equipment of a subscriber or user of the network to the optical network.

The GPON network 32(2) provides a communications link 14(2) between an Internet and switched network 12 and a GPON OLT 22(2). It may also provide a communication link between the GPON OLT 22(2) and a telecommunication user or subscriber (not shown). The GPON network 32(2) may also include a GPON ODN 20(2), and a GPON ONU 28.

The GPON OLT 22(2), which may be either centralized or decentralized, may operate via an optical transceiver for broadcasting data, multimedia, and telephone signals to a plurality of GPON ONUs 28 and for receiving data, multimedia, and telephone signals from the GPON ONUs 28. Additionally, the GPON OLT 22(2) may operate as a network manager for managing the GPON ONUs 28, executing its network management functions in accordance with an OMCI.

The GPON ODN 20(2) has an optical communication link to the GPON OLT 22(2). The GPON ODN 20(2) includes an optical splitter allowing multiple GPON ONUs 28 to be coupled to a GPON OLT 22(2). For example, a typical GPON ODN 20(2) may provide up to 32, 64, or 128 optical connections to the GPON ONUs 28.

Communication in the direction from the OLT 22 to the ONUs 26, 28 is termed "downstream" and communication in the direction from the ONU 26, 28 to the OLT 22 is termed "upstream".

A converter 16 provides a communication link from the BPON ODN 20(1) to the GPON OLT 22(2). Although the illustration shows the converter 16 within the BPON network 32(1), the converter may be located anywhere in the optical path between the GPON OLT 22(2) and the BPON ODN 20(1), including being co-located with the GPON OLT 22(2) or the BPON ODN 20(1). Additionally, the converter may provide a communication link 18 to the BPON OLT 22(1).

An optional splitter 30 splits the communication link from the GPON OLT 22(2) to the BPON ODN 20(1) and the GPON ODN 20(2). The splitter 30 may be located anywhere along the optical path between the converter 16 and the GPON OLT 22(2). If the converter 16 is co-located with the GPON OLT 22(2), the splitter 30 may not be required.

During the installation and operation of the legacy BPON network 32(1), the BPON ONUs 26 are initialized via a process called ranging. Since the upstream communication is via Time Division Multiple Access (TDMA), the BPON ONUs 26 must be synchronized to communicate at a particular time slot to prevent communication collisions. Ranging establishes the synchronization by the BPON OLT 22(1) by determining the distance of each BPON ONU 26 and assigning the time slot in which the ONU 26 may transmit. Subsequently, the BPON OLT 22(1) sends grant messages via the Physical Layer Operation, Administration, and Maintenance (PLOAM) cells to provision the TDMA slots that are assigned to that BPON ONU 26. The BPON OLT 22(1) stores ranging and initialization information for each BPON ONU 26.

As the legacy BPON network 32(1) is being upgraded to a GPON network 32(2), the converter 16 is provisioned to appear like a BPON OLT 22(1) to the BPON ONUs 26. Provisioning the converter 16 to appear like a BPON OLT 22(1) requires that the converter 16 have access to ranging information for the BPON ONUs 26 in order to range the BPON ONUs 26. This may be done by a learning phase in which ranging information is obtained during normal BPON network 32(1) operation. During the learning phase, the converter 16 sets up managed entities for the BPON ONUs 26. Once the learning is complete, the BPON OLT 22(1) and communications links 14(1), 18 are removed. Alternatively, the converter 16 may gain ranging information via the messages sent by the GPON OLT 22(2). Those skilled in the art will appreciate that there are other methods that would facilitate the converter 16 acquiring ranging information without deviating from the invention.

Additionally, the converter 16 provides the networks the ability to communicate with each other even though they use different protocols. For one communication method, the converter 16 may convert downstream frames in the GPON network 32(2) protocol to downstream frames in the BPON network 32(1) protocol. Likewise, the converter may convert upstream frames in the BPON network 32(1) to upstream frames in the GPON network 32(1). In embodiments of the present invention that include a converter 16 that is not co-located with the GPON OLT 22(2), the converter 16 may be provisioned to look like a GPON ONU 28 to establish a communications link between the GPON OLT 22(2) and the converter 16. In embodiments of the present invention that include a converter 16 that is co-located with the GPON OLT 22(2), the converter 16 may covert messages from the Internet and switched networks 12 directly to the BPON network 32(1) without requiring a GPON conversion.

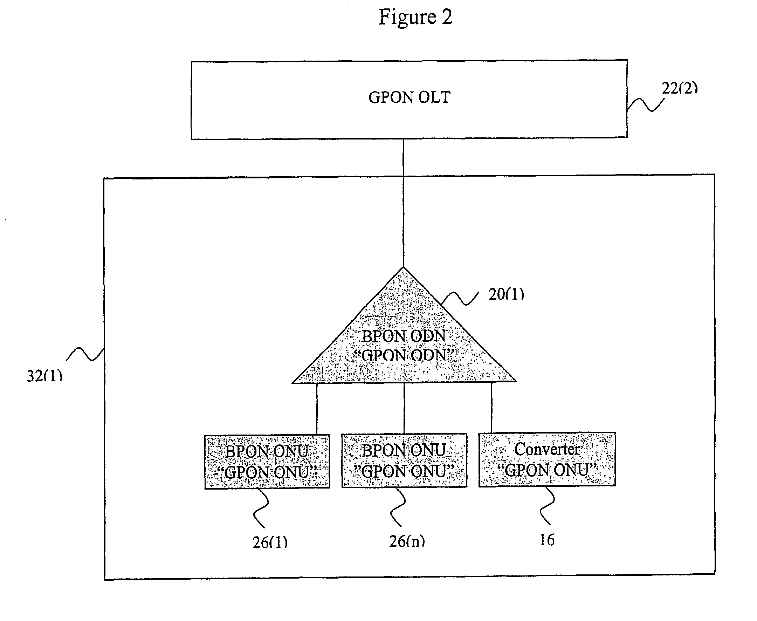

Figure 2 illustrates how the converter 16 appears in terms of provisioning to the GPON OLT 22(2). In this illustration, shaded items represent equipment with both an actual and a virtual provisioning appearance. The virtual appearance is indicated in quotes. In the virtual perspective, the BPON ONUs 26 and the converter 16 appear as "GPON ONUs" 26,16 to the GPON OLT 22(2). In reality, however, the BPON ONUs 26 are legacy BPON ONUs and the converter 16 is connected upstream of these legacy BPON ONUs as illustrated in Figure 1.

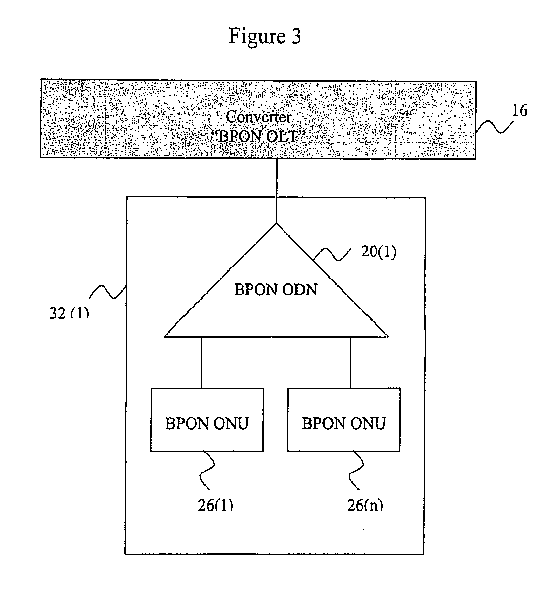

Figure 3 illustrates how the converter 16 appears in terms of provisioning to the BPON network 32(1). Again, shaded items represent equipment with both an actual and a virtual provisioning appearance (virtual appearances are indicated in quotes). To the BPON ONUs 26, the converter 16 appears as a "BPON OLT "16.

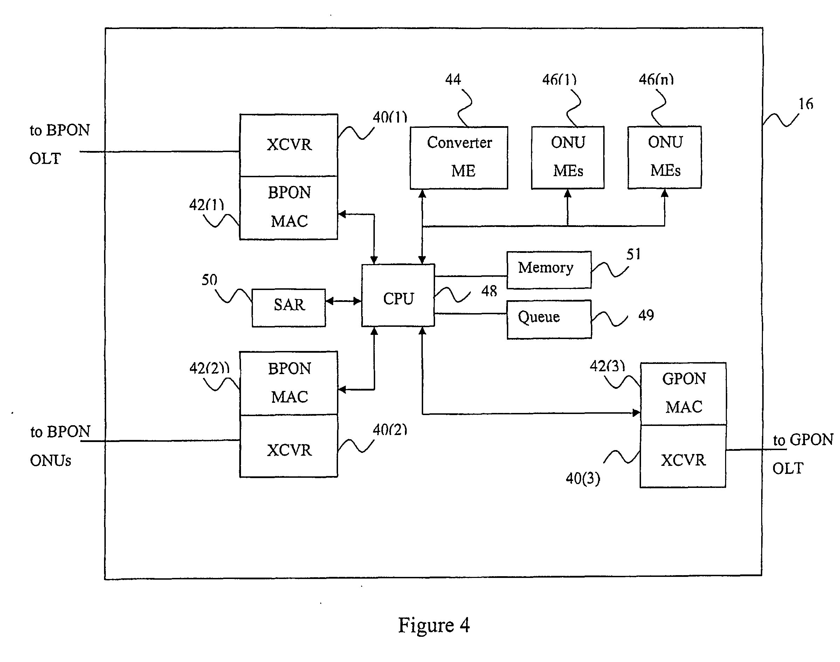

Figure 4 illustrates an exemplary embodiment of a converter 16 consistent with the present invention. The converter may include a first BPON Media Access Controller (MAC) 42(1) for managing the data link layer of transmissions from a legacy BPON OLT during a learning phase. The converter may include a corresponding transceiver (XCVR) 40(1) for receiving BPON transmissions from the legacy BPON OLT. A second BPON MAC 42(2) may be provided for managing the data link layer of transmissions to and from one or more legacy BPON ONUs. A corresponding XCVR 40(2) may be provided for transmitting and receiving BPON transmissions to and from the legacy BPON ONUs. The converter 16 may also include a GPON MAC 42(3) and a corresponding XCVR 40(3) for transmitting and receiving GPON transmissions to and from the GPON OLT 22(2). However, in an alternate embodiment, the converter 16 is co-located with the GPON OLT 22(2) and has direct access to the backplane of the GPON OLT. In this alternate embodiment, the converter 16 may act upon transmissions from the Internet and switched networks 12 before the transmissions are formatted as GPON transmissions, making the GPON MAC 42(3) and XCVR 40(3) unnecessary.

The converter may further include a Central Processing Unit (CPU) 48 for executing processing functions for the converter 16. The CPU may be coupled to the MACs 42 and to a memory 51, a queue 49, a Segment and Reassembly (SAR) unit 50, and managed entities 44, 46. The queue 49 is used to store and manage incoming and outgoing transmissions. The SAR unit 50 may comprise hardware, software or a combination thereof. The SAR unit 50 performs functions associated with segmenting and reassembling data during conversion of the data, for example, from TDM data to and from ATM data. The managed entities may include a converter managed entity 44 and ONU managed entities 46. The converter managed entity 44 stores and process parameters associated with converting transmissions between BPON and GPON format. The ONU managed entities 46 store and process parameters associated with transmission between and management of ONUs and an OLT.

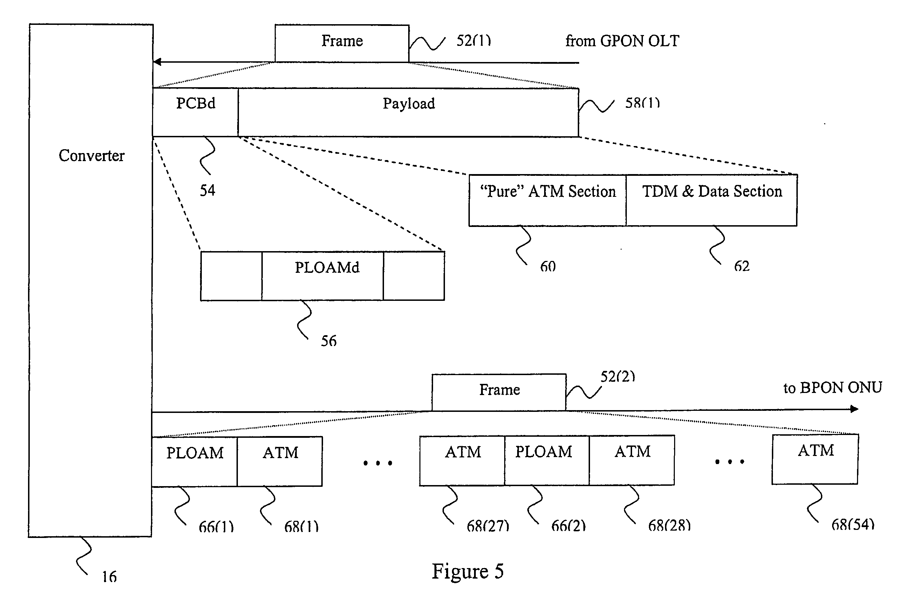

Figure 5 illustrates an exemplary downstream transmission consistent with the present invention. The transmission includes a frame 52(1) formatted according to the GPON protocol traveling from the GPON OLT 22(2) to the converter 16 (in the downstream direction). The frames 52(1) have a fixed length of 125us. Each frame 52(1) includes a Physical Control Block downstream (PCBd) 54 and a payload 58(1). The PCBd 54 is a variable length field and includes a PLOAM downstream (PLOAMd) field 56. A typical PLOAMd field 56 has a 13-byte length and is embodied in accordance with the G.984.3 standard. The payload 58(1) may include a "Pure" ATM section 60 and a TDM and Data Section. The "Pure" ATM section contains n number of 53 byte ATM cells. The TDM and Data Section 62 contains fragments of TDM, Ethernet, or data packets.

A typical downstream frame 52(2) format in the BPON protocol traveling from the converter 16 to the BPON ONU 26 is also illustrated. A typical downstream frame 52(2) has 54 cells where each cell is 53 bytes. The first and 27^{th} cells are PLOAM cells 66 and the others are ATM cells 68. The converter receives a frame 52(1) from the GPON OLT 22(2) and puts the payload into the queue for further processing 49. The PLOAMd 56 field is converted to a PLOAM cell 66 if necessary. In one embodiment, the GPON protocol uses the "Pure" ATM Section 60 the transport mechanism. ATM cells 68 from the "Pure" ATM Section 60 are received by the converter 16 and sent to the BPON ONU 26. In another embodiment, the GPON protocol uses the TDM & Data Section 62 that requires that the converter 16 be coupled to a SAR unit. The SAR unit 50 uses the ATM adaptation layer to segment the TDM & Data Section 62 into ATM cell 68. The ATM cells 68 are then sent to the BPON ONU 26.

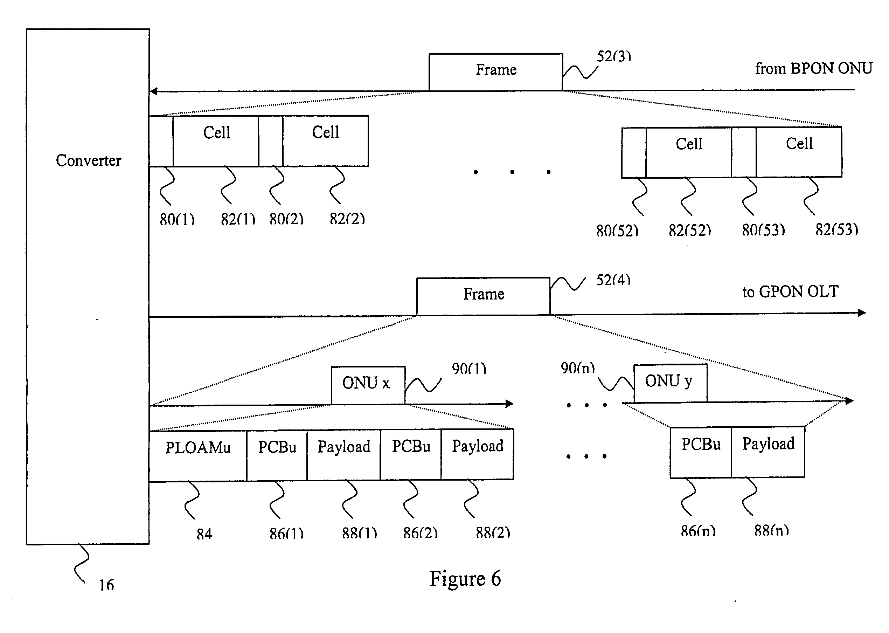

Figure 6 illustrates an exemplary upstream transmission consistent with the present invention. A typical upstream frame 52(3) format is illustrated in BPON protocol format traveling from the BPON ONUs 26 to the converter 16. The frames 52(3) may, for example, be of a fixed size and consists of 53 header 80 and cell 82 pairs. The cell 82 may be an ATM type or a PLOAM type.

A typical upstream frame 52(4) formatted according to the GPON protocol traveling from the converter 16 to the GPON OLT 22(2) is also illustrated. As with the downstream frame 52(1) the typical upstream frame 52(4) may have a fixed length of 125us. The upstream frame 52(4) may include transmissions 90 from one or more ONUs 26. Each ONU transmission 90 may include a PLOAM upstream (PLOAMu) field 84, a PCB upstream (PCBu) field 86, and a payload field 88. A typical PLAOMu field 84 has a 13-byte length. The payload field 88 may contain a "Pure" ATM field or TDM and data field.

The converter 16 receives a frame 52(3) from the BPON ONUs 26 and puts the frame 52(3) into a queue for further processing. The PLOAM cells 82 are converted to PLOAMu cells 84 if necessary.

In one embodiment, the GPON protocol uses the "Pure" ATM Section in the transport mechanism. In another embodiment, the GPON protocol uses the TDM and Data Section, which requires that the converter 16 be coupled to a SAR unit 50. The SAR unit 50 uses the ATM adaptation layer to reassemble the ATM cells 82 into TDM & Data, which is then formatted into GEM frames and sent to the GPON OLT 22(2) .

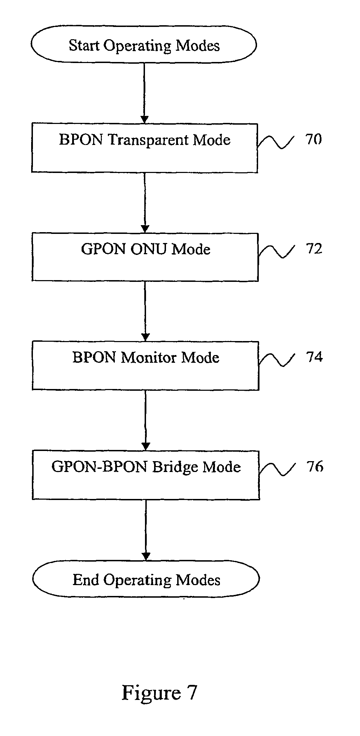

Figure 7 illustrates a learning phase associated with the converter of Figure 4. The learning phase comprises the following operating modes, a BPON transparent mode 70, a GPON ONU mode 72, BPON Monitor mode 74, and a GPON-BPON bridge mode 76. Preferably control of the operating modes is provided from the GPON OLT 22(2) via the creation of a new managed entity. The BPON operating modes 70 and 74 are not mandatory; however, it is preferable that all the operating modes are exercised.

In the BPON transparent mode 70, the converter 16 is installed between the BPON OLT 22(1) and the BPON ODN 20(1). A minor service disruption occurs to introduce the converter 16 into the optical path. The BPON transparent mode 70 may be the default mode of the converter 16 after a successful startup of the converter 16. Alternatively, the GPON OLT 22(2) may manage the operation of this mode 70 via an OMCI managed entity request of the converter managed entity 44. While in this mode 70, transmission transparently continues to pass through the legacy BPON network 32(1) between the BPON ODN 20(1) and the BPON OLT 22(1). One purpose of the BPON transparent mode 70 is to ensure that the introduction of the converter hardware into the legacy BPON network 32(1) does not affect the existing BPON network 32(1) operation or ONU 26 user services. During this mode 70, the BPON transmission convergence (TC) layer is not terminated or directed to active components within the converter 16.

One purpose of the GPON ONU mode 72 is to provision the converter 16 as a GPON ONU 28 within the GPON network 32(2). Once provisioned, the OMCI channel is established, which allows creation of and control of managed entities. Also, the traffic paths between the priority queues 49 and the GPON OLT 22(2) are established. During this mode 72, the BPON ONU 26 transmission continues through the BPON network 32(1).

The BPON monitor mode 74 allows the converter 16 to learn the BPON ONU 26 TC layer configuration data as well as the user services provisioned. Transmission continues to transparently pass through the legacy BPON network 32(1) between the BPON ODN 20(1) and the BPON OLT 22(1) while the converter monitors the upstream and downstream transmissions. This mode 74 may be activated, for example, via a GPON OLT 22(2) managed entity request During this mode 74, the converter monitors the TC layer to determine configuration and bandwidth information that is stored for later use in the GPON-BPON bridge mode 76. Configuration and bandwidth information may include upstream bandwidth, downstream bandwidth, serial numbers, associated BPON ONU 26 identifiers, grant allocations, upstream overhead parameters, virtual path/virtual circuit assignments and chum control. Also during this mode 74, the converter may monitor the OMCI traffic and store in memory 51 the managed entities related to user interfaces and services. In order to ensure a clean starting point for the monitoring and storage of the data, it may be required to restart all BPON ONUs 26 in the BPON ODN 20(1).

The GPON-BPON bridge mode 76 is an operational mode in which transmissions occur between the BPON ONUs 26 and the GPON network 32(2). During the bridge mode 76, the BPON OLT 22(1) is disconnected and the converter takes over managing the BPON ONUs 26. The converter 16 may range the BPON ONUs 26 either directly or via the GPON OLT 22(2). The GPON OLT 22(2) may retrieve and update the managed entities to mitigate any discrepancy between the learned parameters and the downloaded parameters.

Once migrated to the GPON network 22(2), the BPON ONU 26 maintenance activities such as reset, download, service status, alarm, and fault handling may be managed by the converter 16 acting as a BPON OLT. This may be facilitated by having each BPON ONU 26 appear as a "virtual" GPON ONU 26. The converter 16 may store managed entities within the converter 16 that are associated with the "virtual" GPON ONUs 26.

The present invention has been described in the context of communicating between a GPON and BPON network. The invention may, however, be embodied in many different forms and may be applied to many different types of networks and protocols and should not be construed as limited to the embodiments set forth hererin. Rather, these embodiments are provided so that this disclosure will be thorough and complete, and will fully convey the scope of the invention to those skilled in the art. Thus, the scope of the invention should be determined based upon the appended claims and their legal equivalents, rather than the specific embodiments described above.

## Claims

1. A method of upgrading a legacy Broadband Passive Optical Network, BPON (32(1)), having a legacy BPON Optical Line Terminal, OLT (22(1)), and a plurality of legacy BPON Optical Network Units, ONUs (26(1), ..., 26(n)), to facilitate communication between the legacy BPON ONUs (26(1), ..., 26(n)) and an upgraded Gigabit Passive Optical Network, GPON, OLT (22(2)), comprising:
- installing a converter (16) between the plurality of legacy BPON ONUs (26(1), ..., 26(n)) and the upgraded GPON OLT (22(2));
- provisioning the converter (16) and the legacy BPON ONUs (26(1), ..., 26(n)) to appear in the downstream direction to the upgraded GPON OLT (22(2)) as virtual GPON ONUs;
- provisioning the converter (16) to appear in the upstream direction to the plurality of legacy BPON ONUs (26(1), ..., 26(n)) as a virtual BPON OLT;
- connecting the legacy BPON OLT to the converter to conduct a learning phase to identify legacy ranging data associated with a prior ranging of the legacy BPON OLT and the plurality of legacy BPON ONUs;
- wherein the learning phase includes the step of identifying and storing legacy ranging data from a Physical Layer Operation Administration and Maintenance, PLOAM, cell.

2. The method of claim 1, further comprising disconnecting the legacy BPON OLT from the converter after the learning phase.

3. The method of claim 1, further comprising converting, by the converter, transmissions in the upstream direction from a BPON format to a GPON format and converting, by the converter, transmissions in the downstream direction from the GPON format to the BPON format.

4. The method of claim 3, wherein the step of converting includes transferring, by the converter, Asynchronous Transfer Mode, ATM, cells from a payload of an upstream BPON transmission to an ATM payload section of an upstream GPON transmission.

5. A converter (16) for facilitating communication between a plurality of legacy Broadband Passive Optical Network, BPON, ONUs (26(1), ..., 26(n)), and an upgraded Gigabit Passive Optical Network, GPON, Optical Line Terminal, OLT (22(2)), comprising:
- a central processing unit (48), a memory (51), and a queue (49) for storing and processing data transmitted and received by the converter (16);
- a BPON transceiver (40(1), 40(2)) for transmitting and receiving BPON frames between the converter (16) and the legacy BPON ONUs (26(1), ..., 26(n));
- a BPON Media Access Controller, MAC (42(1), 42(2)), for processing the BPON frames transmitted to and received from the legacy BPON ONUS (26(1), ..., 26(n)); and
- a converter managed entity (44) and a plurality of ONU managed entities (46(1), ..., 46(n)) for storing and manipulating parameters related to the management of the legacy BPON ONUS (26(1), ..., 26(n)) and the upgraded GPON OLT (22(2));
- a GPON transceiver for transmitting and receiving GPON frames between the converter and a GPON OLT, and a GPON MAC for processing the GPON frames transmitted and received by the converter;
- a BPON transceiver for receiving BPON frames from a BPON OLT for conducting a learning phase, and a BPON MAC for processing BPON frames received by the converter from the BPON OLT;
- wherein the learning phase includes monitoring, by the converter, transmissions between the legacy BPON ONUs and the legacy BPON OLT to identify legacy ranging data for use in ranging the legacy BPON ONUs.

6. The converter of claim 5, further comprising an unbalanced splitter connected downstream from the GPON OLT for splitting transmissions between the converter and an upgraded GPON ODN.

7. The converter of claim 5, wherein the converter is co-located with the new GPON OLT and is configured to have direct access to the backplane of the GPON OLT.

8. The converter of claim 7, wherein the converter acts on downstream transmissions before the transmissions are formatted as GPON transmissions.

9. The converter of claim 5, wherein the converter is coupled to a Segment and Reassembly, SAR (50), unit for segmenting and reassembling transmissions between the legacy BPON ONUs and the new GPON OLT to convert the transmission between an Asynchronous Transfer Mode, ATM, format and a GPON Encapsulation Method, GEM, frame format.

## Patentansprüche

1. Verfahren zum Aufrüsten eines veralteten breitbandigen passiven optischen Netzes bzw. BPON (32(1)) mit einem veralteten optischen BPON-Leitungsabschluß bzw. OLT (22(1)) und mehreren veralteten optischen BPON-Netzeinheiten bzw. ONU (26(1), ..., (26(n)), um Kommunikation zwischen den veralteten BPON-ONU (26(1), ..., (26(n)) und einem OLT (22(2)) eines aufgerüsteten passiven optischen Gigabit-Netzes bzw. GPON zu ermöglichen, mit den folgenden Schritten:
- Installieren eines Umsetzers (16) zwischen den mehreren veralteten BPON-ONU (26(1), ..., (26(n)) und dem aufgerüsteten GPON-OLT (22(2));
- Bereitstellen des Umsetzers (16) und der veralteten BPON-ONU (26(1), ..., (26 (n)) so, daß sie in der Signalabwärtsrichtung dem aufgerüsteten GPON-OLT (22(2)) als virtuelle GPON-ONU erscheinen;
- Bereitstellen des Umsetzers (16) so, daß er in der Signalaufwärtsrichtung den mehreren veralteten BPON-ONU (26(1), ..., (26(n)) als ein virtueller BPON-OLT erscheint;
- Verbinden des veralteten BPON-OLT mit dem Umsetzer, um eine Lernphase durchzuführen, um veraltete Ranging-Daten zu identifizieren, die mit einem vorherigen Ranging des veralteten BPON-OLT und der mehreren veralteten BPON-ONU assoziiert sind;
- wobei die Lernphase den Schritt des Identifizierens und Speicherns von veralteten Ranging-Daten aus einer Zelle von Betrieb, Verwaltung und Wartung der Bitübertragungsschicht bzw. PLOAM umfaßt.

2. Verfahren nach Anspruch 1, bei dem ferner der veraltete BPON-OLT nach der Lernphase von dem Umsetzer getrennt wird.

3. Verfahren nach Anspruch 1, bei dem ferner der Umsetzer Übertragungen in der Signalaufwärtsrichtung aus einem BPON-Format in ein GPON-Format umsetzt und der Umsetzer Übertragungen in der Signalabwärtsrichtung aus dem GPON-Format in das BPON-Format umsetzt.

4. Verfahren nach Anspruch 3, wobei der Schritt des Umsetzens umfaßt, daß der Umsetzer Zellen des asynchronen Transfermodus bzw. ATM aus Nutzinformationen einer Signalaufwärts-BPON-Übertragung in einen ATM-Nutzinformationsteil einer Signalaufwärts-GPON-Übertragung transferiert.

5. Umsetzer (16) zur Ermöglichung der Kommunikation zwischen mehreren ONU (26(1), ..., (26(n)) eines veralteten breitbandigen passiven optischen Netzes bzw. BPON und einem OLT (22(2)) eines aufgerüsteten passiven optischen Gigabit-Netzes bzw. GPON, umfassend:
- eine zentrale Verarbeitungseinheit (48), einen Speicher (51) und eine Warteschlange (49) zum Speichern und Verarbeiten von durch den Umsetzer (16) gesendeten und empfangenen Daten;
- einen BPON-Sender/Empfänger (40 (1), 40(2)) zum Senden und Empfangen von BPON-Rahmen zwischen dem Umsetzer (16) und den veralteten BPON-ONU (26(1), ..., (26(n));
- eine Medienzugriffssteuerung bzw. MAC (42(1), 42(2)) des BPON zum Verarbeiten der BPON-Rahmen, die zu den veralteten BPON-ONU (26(1), ..., (26(n)) gesendet und aus diesen empfangen werden; und
- eine verwaltete Entität (44) des Umsetzers und mehrere verwaltete Entitäten (46(1), ..., 46(n)) der ONU zum Speichern und Manipulieren von Parametern in bezug auf die Verwaltung der veralteten BPON-ONU (26(1), ..., (26(n)) und des aufgerüsteten GPON-OLT (22(2));
- einen GPON-Sender/Empfänger zum Senden und Empfangen von GPON-Rahmen zwischen dem Umsetzer und einem GPON-OLT und eine GPON-MAC zum Verarbeiten der durch den Umsetzer gesendeten und empfangenen GPON-Rahmen;
- einen BPON-Sender/Empfänger zum Empfangen von BPON-Rahmen aus einem BPON-OLT zum Durchführen einer Lernphase und eine BPON-MAC zum Verarbeiten von durch den Umsetzer aus dem BPON-OLT empfangenen BPON-Rahmen;
- wobei die Lernphase umfaßt, daß der Umsetzer Übertragungen zwischen den veralteten BPON-ONU und dem veralteten BPON-OLT überwacht, um veraltete Ranging-Daten zur Verwendung beim Ranging der veralteten BPON-ONU zu identifizieren.

6. Umsetzer nach Anspruch 5, ferner umfassend einen signalabwärts des GPON-OLT angeschlossenen asymmetrischen Splitter zum Aufzweigen von Übertragungen zwischen dem Umsetzer und einem aufgerüsteten GPON-ODN.

7. Umsetzer nach Anspruch 5, wobei sich der Umsetzer bei dem neuen GPON-OLT befindet und für Direktzugriff auf die Backplane des GPON-OLT ausgelegt ist.

8. Umsetzer nach Anspruch 7, wobei der Umsetzer an Signalabwärtsübertragungen wirkt, bevor die Übertragungen als GPON-Übertragungen formatiert werden.

9. Umsetzer nach Anspruch 5, wobei der Umsetzer mit einer Einheit für Segmentierung und Neuzusammenstellung bzw. SAR (50) zum Segmentieren und Neuzusammenstellen von Übertragungen zwischen den veralteten BPON-ONU und dem neuen GPON-OLT gekoppelt ist, um die Übertragung zwischen einem Format des asynchronen Transfermodus bzw. ATM und einem Rahmenformat der GPON-Einkapselungsmethode bzw. GEM umzusetzen.

## Revendications

1. Procédé de mise à niveau d'un Réseau Optique Passif Large Bande héritétraditionnel, BPON (32(1)), ayant un Terminal de Ligne Optique, OLT (22(1)), de BPON héritétraditionnel, et une pluralité d'Unités de Réseau Optique, ONU (26(1), ..., 26(n)) de BPON héritétraditionnel, pour faciliter une communication entre les ONU (26(1), ..., 26(n)) de BPON héritétraditionnel et un OLT (22(2)) de Réseau Optique Passif Gigabit, GPON, mis à niveau, comprenant :
- l'installation installer d'un convertisseur (16) entre la pluralité d'ONU (26(1), ..., 26(n)) de BPON héritétraditionnel et l'OLT (22(2)) de GPON mis à niveau ;
- la prévisionpourvoir à ce que le convertisseur (16) et les ONU (26(1), ..., 26(n)) de BPON héritétraditionnel apparaissent dans la direction descendante à l'OLT (22(2)) de GPON mis à niveau comme des ONU virtuelles de GPON ;
- pourvoir à ce la prévision que le convertisseur (16) apparaisse dans la direction montante à la pluralité d'ONU (26(1), ..., 26(n)) de BPON héritétraditionnel comme un OLT virtuel de BPON ;
- la connexion deconnecté à l'OLT de BPON héritétraditionnel au convertisseur pour conduire mener une phase d'apprentissage pour identifier des données d'échelle héritéestraditionnelles associées avec une échelle antérieure de l'OLT de BPON héritétraditionnel et la pluralité d'ONU de BPON héritétraditionnel ;
- dans lequel la phase d'apprentissage inclut l'étape d'identification et de stockage de données d'échelle héritéestraditionnelles à partir d'une cellule d'Opération, d'Administration et de Maintenance de Couche Physique, PLOAM.

2. Procédé selon la revendication 1, comprenant en outre la déconnexion de l'OLT de BPON héritétraditionnel du convertisseur après la phase d'apprentissage.

3. Procédé selon la revendication 1, comprenant en outre la conversion, par le convertisseur, de transmissions dans la direction montante d'un format BPON en un format GPON et la conversion, par le convertisseur, de transmissions dans la direction descendante du format GPON au format BPON.

4. Procédé selon la revendication 3, dans lequel l'étape de conversion inclut le transfert, par le convertisseur, de cellules en Mode de Transfert Asynchrone, ATM, d'une chargemp de donnéesutile d'une transmission BPON montante vers une section de champ de données rge utile ATM d'une transmission GPON montante.

5. Convertisseur (16) pour faciliter une communication entre une pluralité d'ONU (26(1), ..., 26(n)) de Réseau Optique Passif Large Bande héritétraditionnel, BPON, et un Terminal de Ligne Optique, OLT (22(2)) de Réseau Optique Passif Gigabit, GPON, mis à niveau, comprenant :
- une unité de traitement centralisée (48), une mémoire (51), et une file d'attente (49) pour stocker et traiter des données transmises et reçues par le convertisseur (16) ;
- un émetteur-récepteur BPON (40(1), 40(2)) pour transmettre et recevoir des trames BPON entre le convertisseur (16) et les ONU (26(1), ..., 26(n)) de BPON héritétraditionnel ;
- un Contrôleur d'Accès aux Supports, MAC (42(1), 42(2)), de BPON pour traiter les trames BPON transmises vers les et reçues des ONU (26(1), ..., 26(n)) de BPON héritétraditionnel ; et
- une entité (44) gérée par le convertisseur et une pluralité d'entités (46(1), ..., 46(n)) gérées par les ONU pour stocker et manipuler des paramètres relatifs à la gestion des ONU (26(1), ..., 26(n)) de BPON héritétraditionnel et de l'OLT (22(2)) de GPON mis à niveau ;
- un émetteur-récepteur GPON pour transmettre et recevoir des trames GPON entre le convertisseur et un OLT GPON, et un MAC GPON pour traiter les trames GPON transmises et reçues par le convertisseur ;
- un émetteur-récepteur BPON pour recevoir des trames BPON d'un OLT BPON pour exécuter une phase d'apprentissage, et un MAC BPON pour traiter les trames BPON reçues par le convertisseur de l'OLT BPON ;
- dans lequel la phase d'apprentissage inclut la surveillance, par le convertisseur, de transmissions entre les ONU de BPON héritétraditionnel et l'OLT de BPON héritétraditionnel pour identifier des données d'échelle héritéestraditionnelles destinées à une utilisation dans la mise à l'échelle des ONU de BPON héritétraditionnel.

6. Convertisseur selon la revendication 5, comprenant en outre un séparateur non équilibré connecté en aval de l'OLT de GPON pour séparer des transmissions entre le convertisseur et un ODN de GPON mis à niveau.

7. Convertisseur selon la revendication 5, dans lequel le convertisseur est co-situé avec le nouvel OLT de GPON et est configuré de façon à avoir un accès direct au fond de panier de l'OLT de GPON.

8. Convertisseur selon la revendication 7, dans lequel le convertisseur agit sur des transmissions descendantes avant que les transmissions ne soient formatées comme transmissions GPON.

9. Convertisseur selon la revendication 5, dans lequel le convertisseur est couplé à une unité de Segmentation et de Réassemblage, SAR (50) pour segmenter et réassembler des transmissions entre les ONU de BPON héritétraditionnel et le nouvel OLT de GPON pour convertir la transmission entre un format de Mode de Transfert Asynchrone (ATM) et un format de trames de Procédé d'Encapsulation GPON, GEM.
